**Europäisches Patentamt**

**European Patent Office**

**Office européen des brevets**

(19)

(11) Numéro de publication: **0 208 570**
**B1**

(12) **FASCICULE DE BREVET EUROPEEN**

(45) Date de publication du fascicule du brevet: **23.05.90**

(21) Numéro de dépôt: **86401171.3**

(22) Date de dépôt: **02.06.86**

(51) Int. Cl.⁵: **A 62 B 1/20, B 64 D 25/14, B 63 C 9/22, B 60 R 21/08**

(54) **Procédé et dispositif d'ouverture d'un conteneur de structure gonflable notamment tel qu'un toboggan d'évacuation d'avion.**

(30) Priorité: **17.06.85 FR 8509149**

(43) Date de publication de la demande:
**14.01.87 Bulletin 87/03**

(45) Mention de la délivrance du brevet:
**23.05.90 Bulletin 90/21**

(84) Etats contractants désignés:
**DE GB IT**

(56) Documents cités:
**FR-A-1 552 091**
**FR-A-2 474 994**
**US-A-3 598 215**

(73) Titulaire: **AERAZUR EFA**
**58, Boulevard Galliéni**
**F-92130 Issy les Moulineaux (FR)**

(72) Inventeur: **Labarre, Michel**
**6, rue Anatole France**
**F-94300 Vincennes (FR)**
Inventeur: **Debray, Gilles**
**41, rue des Solitaires**
**F-75019 Paris (FR)**
Inventeur: **Cantelaube, Jean**
**7, rue de Broderie**
**F-78340 Les Clayes Sous Bois (FR)**

(74) Mandataire: **Kügele, Bernhard et al**
**NOVAPAT-CABINET CHEREAU 63 bis, boulevard Bessiéres**
**F-75017 Paris (FR)**

Courier Press, Leamington Spa, England.

**Description**

La présente invention a pour objet un procédé et un dispositif d'ouverture d'un conteneur de structure gonflable notamment tel qu'un toboggan d'évacuation d'avion et autres systèmes analogues (canot pneumatique, coussins antichocs, etc...). Dans un but de clarté, la description suivante se réfère à un toboggan d'avion. Mais on comprendra que le principe, et les moyens, aussi bien le moyen général que le moyen particulier sont utilisables pour d'autres applications.

On connaît de nombreuses réalisations de conteneurs de toboggans utilisés dans l'Aviation Civile pour répondre aux exigences de la sécurité aéronautique.

Les conteneurs intégrés dans le Karman de voilure, à l'intersection de l'aile et du fuselage de l'avion, forment un logement dont l'ouverture est assurée par la rotation vers l'extérieur, d'une porte qui en position fermée doit être verrouillée sans possibilité de déverrouillage intempestif. En cas d'utilisation du toboggan, l'ouverture commandée de cette porte doit être réalisée avec un haut niveau de fiabilité.

Généralement, et jusqu'à présent, cette fonction de fermeture/ouverture de ce type de conteneur est assurée par une ligne de verrous mécaniques disposés en série.

Cette technologie usuelle présente l'inconvénient de la mobilité fonctionnelle des verrous:

leur translation commandée soit mécaniquement ou soit électriquement, exige la mise en oeuvre de dispositifs spécifiques pénalisant les bilans massique et économique de l'installation;

leur déplacement potentiel, sous l'effet de causes extérieures aléatoires, peut être la source de déverrouillages intempestifs, ce qui impose de recourir à des organes palliatifs qui désavantagent d'autant les bilans susvisés.

La présente invention a pour objet essentiel d'éviter toutes ces contraintes en assurant simplement et avec un haut niveau de fiabilité:

le verrouillage absolu de la porte de fermeture du conteneur,

et son ouverture instantanée intégrée dans la séquence de gonflement du toboggan.

Conformément à la présente invention, le procédé de libération d'un système gonflable, incluant une source de fluide de gonflage, le plus souvent une bouteille de gaz comprimé, est remarquable notamment en ce qu'on commande l'ouverture de la bouteille de façon à alimenter en gaz sous pression la structre du toboggan, et que l'on utilise la pression de ce gaz pour commander le fonctionnement d'un relais, pour déclencher un organe pyrotechnique, dont la mise en oeuvre brise des moyens de retenue de la porte du conteneur du toboggan avant que celui-ci n'ait commencé à se gonfler.

La porte obturant le conteneur renfermant le toboggan est ainsi retenue fermée par des moyens brisables (pièces à casser) qui peuvent avoir une résistance très supérieure à ce qui est nécessaire pour maintenir la porte fermée pendant l'exploitation normale. Par contre, en cas d'urgence, un organe pyrotechnique peut fournir un effort de rupture aussi élevé que l'on voudra pour briser sans délai, et sans risque d'échec les moyens de retenue.

Le dispositif selon l'invention, pour la mise en oeuvre du procédé ci-dessus, comprenant une conduite d'alimentation en fluide sous pression du système gonflable, est remarquable notamment en ce qu'une dérivation est prévue sur ladite canalisation, cette dérivation étant branchée sur un percuteur à commande pneumatique, le percuteur commandant la mise à feu d'un organe pyrotechnique disposé de façon que sa mise en oeuvre brise les moyens de retenue de la porte du conteneur du système gonflable.

Selon la présente invention, on utilise comme organe pyrotechnique un tube rempli de poudre ou analogue, et dont au moins certaines zones sont aplaties. Un tel organe pyrotechnique est connu en soi.

L'explosion de la poudre provoque l'expansion des zones aplaties, cette expansion étant utilisée pour briser les moyens de retenue de la porte du conteneur du système gonflable.

Selon une autre caractéristique de l'invention, les moyens de retenue comportent au moins un élément dit pièce à casser, cette pièce comportant une partie de section conformée de façon à y localiser une rupture. Cette partie peut en particulier comporter une saignée dont le fond est constitué par un angle (dièdre). Avantageusement, une seconde saignée peut être prévue au voisinage de la première, pour favoriser une déformation de la pièce à casser au voisinage de la zone de rupture.

D'autres caractéristiques et avantages de la présente invention apparaîtront au cours de la description qui va suivre, donnée à titre d'exemple non limitatif, en regard des dessins ci-joints, et qui fera bien comprendre comment l'invention peut être réalisée.

Sur les dessins:

La figure 1 est un schéma d'un dispositif selon l'invention;

La figure 2 est une vue en coupe schématique d'un exemple de réalisation d'un moyen de retenue de la porte d'un conteneur renfermant un système gonflable; et

La figure 3 est une vue de profil d'un élément de la figure 2, après mise en oeuvre du procédé de l'invention.

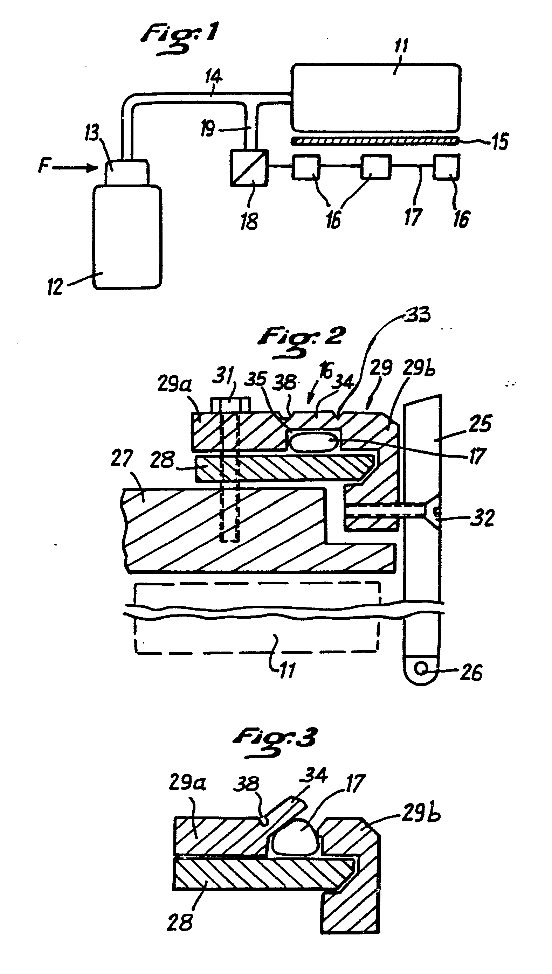

Le dispositif représenté schématiquement sur la figure 1 comporte un système gonflable tel qu'un toboggan 11 d'évacuation de secours pour avion, une bouteille de gaz comprimé 12 pour assurer le gonflage du toboggan, avec un robinet 13, et une canalisation 14 reliant la bouteille au toboggan. Il suffit d'ouvrir le robinet 13 pour provoquer le gonflage du toboggan, pourvu que celui-ci soit libre de se déployer. On a représenté en 15 la porte d'un conteneur renfermant le toboggan replié, cette porte étant maintenue en position fermée par des pièces 16, dites pièces à casser, et qui seront décrites plus en détail ci-après. La rupture des pièces 16 permet à la porte 15 de s'ouvrir, ce qui laisse le toboggan 11 sortir, avec la liberté de se déployer et se gonfler.

Comme on l'a déjà indiqué, il apparaît à l'évidence que l'invention peut recevoir d'autres applications, telles que pour un canot de sauvetage gonflable, coussin antichoc de voiture, etc... Les adaptations à apporter dans chaque cas seront simples et évidentes à l'homme de l'art, pour autant qu'il y ait à adapter. Conformément à la présente invention, les pièces à casser 16 sont disposées sur un tube ou cordon 17 rempli de poudre ou autre cordeau détonant analogue. La poudre peut être mise à feu par une amorce disposée dans un relais 18. L'amorce est frappée par un percuteur déclenché par une pression de fluide parvenant dans le relais. A cette fin, il est prévu une dérivation 19 connectant le relais 18 à la canalisation 14.

Le procédé de l'invention se déroule de la façon suivante. Si l'on désire libérer et gonfler le toboggan, on ouvre la bouteille d'air comprimé 12, en actionnant le robinet 13, ce qui est représenté par la flèche F. Le gaz comprimé se détend dans la canalisation 14 vers le toboggan 11 et, par la dérivation 19, le relais 18. La pression actionne le percuteur qui peut par exemple être réglé par une goupille à cisailler. La poudre est mise à feu. Le cordon 17 propage une onde de choc qui vient modifier sa section, ce qui brise les pièces à casser 16, et ce, avant même que le toboggan n'ait commencé à se gonfler. La porte 25 n'est plus retenue. Le toboggan peut alors, sous l'effet de la pression de son gaz de remplissage, se déployer et se gonfler sans entrave.

Les figures 2 et 3 représentent plus en détail un mode de réalisation d'une partie de l'invention. Le toboggan 11 est placé dans un conteneur obturé par une porte 25 articulée à sa partie inférieure en 26. La partie supérieure de la porte est appliquée contre la structure 27 du conteneur et est maintenue dans cette position de fermeture par une ou plusieurs pièces à casser. (Il y en a trois sur le schéma de la figure 1, mais ce n'est pas limitatif). La pièce 16 est avantageusement constituée de deux éléments: une plaquette 28 de protection et d'obturation, et une entretoise 29 constituée de deux noix séparées par une zone cassable: une première noix 29a rendue solidaire de la structure 27 du coffre, par exemple par au moins un boulon, et une deuxième noix 29b rendue solidaire de la porte 25 du coffre, par exemple par au moins une vis 32. De cette façon, quand l'entretoise 29 n'est pas cassée la porte 25 est solidaire de la structure 27 et ne peut être ouverte.

La zone cassable peut être formée par un amincissement dans lequel est formée une rainure 33 dont le fond est angulaire (par exemple dièdre de 45 à 90°). L'amincissement forme un pont 34, définissant entre les noix 29a et 29b un canal 35 délimité sur une face par la plaquette 28. Dans le canal ainsi formé est disposé un cordon 17 constitué par un tube de section aplatie (au moins dans la partie qui traverse la pièce à casser 16) rempli de poudre. L'emploi d'un tel tube à expansion est un procédé connu. La plaquette 28 sert à obturer le canal, et à protéger la structure 27. L'entretoise 29 pourrait en effet être appliquée directement contre la structure, mais le fonctionnement du dispositif pourrait détériorer la structure 27. De préférence la rainure 33 à fond angulaire est disposée à une extrémité du pont 34 et une rainure 38, moins profonde, et à fond arrondi est disposée à l'autre extrémité du pont 34. De cette façon, quand la poudre explose dans le tube 17 et quand celui-ci se gonfle ou tout au moins s'arrondit, le pont se brise au droit de la rainure 33 et se plie autour de la rainure 38, comme représenté sur la figure 3. Le pont 34 reste solidaire du système et ne risque pas d'être projeté violemment dans une direction aléatoire. La rainure 33 est plus profonde que la rainure 38, et a une forme angulaire pour déterminer sans aucun risque l'emplacement de la formation de la cassure. La rainure 38 a pour objet de permettre le soulèvement du pont et l'écartement l'un de l'autre des deux bords de la cassure, de façon à libérer la seconde noix de la première de façon sûre, sans risque d'accrochage après la rupture.

En variante, on pourrait prévoir par exemple une rainure à fond angulaire au milieu du pont, et une rainure à fond arrondi à chaque extrémité.

L'épaisseur du pont 34 entre les deux noix, et la profondeur de la rainure 33 sont choisies de façon à obtenir une résistance en traction de l'entretoise 29, d'une noix vers l'autre, suffisante pour résister sans risque de rupture aux efforts auxquels sera soumise en service l'entretoise (et qui peuvent être au niveau de plusieurs centaines de décanewtons). Le cordon 17 sera choisi pour obtenir lors de sa mise à feu une rupture sans risque et sans délai du pont ainsi déterminé.

On a représenté une entretoise 29 dont la noix 29b solidaire de la porte 25 est repliée sous la plaquette 28. C'est une facilité d'assemblage. D'autres configurations sont possibles.

Les pièces à casser sont normalement sollicitées en traction, et sont cassées par cisaillement. Elles ne peuvent former de petits morceaux brisés qui deviendraient de véritables shrapnels, dangereux pour les personnes et les matériels environnants.

Le système de mise en oeuvre pneumatique est initié par une pression très élevée (au niveau par exemple de 10 bars) en regard des pressions parasites possibles; cette pression d'initiation est faible en regard des pressions régulées au sortir de la tête de la bouteille de stockage du gaz comprimé (au niveau de 30 bars par exemple); l'effort de cisaillement engendré par l'expansion du tube pyrotechnique est très supérieur à la résistance des pièces à casser; la résistance en traction des pièces à casser est très supérieure aux efforts de succion aérodynamique appliqués sur la porte du conteneur; le système est intégral, présente une immunité au gel et ne requiert aucune maintenance. On obtient un séquencement très fiable en utilisant des phénomènes physiques répétitifs:

rupture de la goupille du percuteur,

propagation d'une onde de choc (vingt fois la vitesse du son),

écoulement des gaz.

L'invention n'est nullement limitée au mode de réalisation décrit et représenté et peut être modifiée de toutes façons à la portée de l'homme de l'art, notamment par substitution d'équivalents techniques dans la limite des revendications annexées.

## Revendications

1. Procédé d'ouverture d'un conteneur de structure gonflable notamment, tel qu'un toboggan d'évacuation de secours d'avion, caractérisé en ce que l'on utilise la pression du fluide de gonflage pour commander un relais (18) déclenchant un organe pyrotechnique (17) dont la mise en oeuvre brise les moyens de retenue·(16) de la porte du conteneur du système gonflable.

2. Procédé selon la revendication 1, caractérisé en ce que le système gonflable est renfermé dans un volume obturé par une porte (25), maintenue en position fermée par des moyens de retenue brisables (16).

3. Dispositif d'ouverture d'un conteneur de structure gonflable notamment, tel qu'un toboggan d'évacuation de secours d'avion, pour la mise en oeuvre du procédé selon l'une des revendications 1 ou 2, comprenant une conduite (14) d'alimentation en fluide sous pression du système gonflable, caractérisé en ce qu'il comporte une dérivation (19) sur ladite canalisation, cette dérivation étant branchée sur un relais (18) d'actionnement d'un percuteur, monté pour la mise à feu d'un organe pyrotechnique (17) organisé pour briser les moyens de retenue de la porte du conteneur de la structure gonflable.

4. Dispositif selon la revendication 3, dans lequel le système gonflable est logé dans une structure (27) obturée par une porte (25), caractérisé en ce que les moyens de retenue comprennent au moins une entretoise (29), dont une première partie (29a) est rendue solidaire de ladite structure (27) et une seconde partie (29b) est rendue solidaire de la porte (25), une partie cassable étant prévue entre lesdites première et seconde parties.

5. Dispositif selon la revendication 4, caractérisé en ce que la partie cassable est constituée par un pont aminci (34) reliant lesdites première et seconde parties (29a, 29b) et déterminant entre ces parties un canal (35) pour recevoir un cordon du type formé par un tube aplati chargé d'explosif, ledit pont comportant une rainure de cisaillement (33).

6. Dispositif selon la revendication 5, caractérisé en ce que le pont (33) comporte à une de ses extrémités une rainure de cisaillement (33) et à l'autre extrémité une rainure de pliage (38).

7. Dispositif selon l'une des revendications 4 à 6, caractérisé en ce que les moyens de retenue (16) comportent en outre une plaquette de protection (28), disposée entre ladite entretoise (29) et la structure (27).

## Patentansprüche

1. Verfahren zum Öffnen eines Behälters mit aufblasbarer Struktur, insbesondere einer Flugzeugrettungsrutsche, gekennzeichnet durch die Verwendung des Aufblasströmungsmitteldruckes zur Steuerung eines Relais (18), das ein pyrotechnisches Element (17) auslöst, dessen Betätigung die Halteeinrichtungen (16) der Behälteröffnung des aufblasbaren Systems bricht.

2. Verfahren nach Anspruch 1, dadurch gekennzeichnet, daß das aufblasbare System in einem Volumen enthalten ist, das durch einen Verschluß (25) verschlossen ist, der durch brechbare Halteeinrichtungen (16) in der geschlossenen Stellung gehalten wird.

3. Vorrichtung zum Öffnen eines Behälters mit aufblasbarer Struktur, insbesondere einer Flugzeugrettungsrutsche zur Durchführung des Verfahrens nach Anspruch 1 oder 2, mit einer Leitung (14) zur Versorgung des aufblasbaren Systems mit Druckströmungsmittel, gekennzeichnet durch eine Abzweigung (19) an der Leitung, die an ein Relais (18) zur Betätigung eines Schlagbolzens angeschlossen ist, der zur Zündung eines pyrotechnischen Elements (17) angeordnet ist, das so ausgebildet ist, daß er die Halteeinrichtung der Behälteröffnung der aufblasbaren Struktur bricht.

4. Vorrichtung nach Anspruch 3, wobei das aufblasbare System in einer durch eine Öffnung (25) verschlossenen Struktur (27) angeordnet ist, ' dadurch gekennzeichnet, daß die Halteeinrichtungen wenigstens eine Querstrebe (29) aufweisen, deren erster Teil (29a) mit der Struktur (27) und deren zweiter Teil (29b) mit dem Verschluß (25) verbunden ist, wobei ein brechbarer Teil zwischen dem ersten und zweiten Teil vorgesehen ist.

5. Vorrichtung nach Anspruch 4, dadurch gekennzeichnet, daß der brechbare Teil aus einem reduzierten Zwischenstück (34) besteht, das den ersten und zweiten Teil (29a, 29b) verbindet und zwischen diesen Teilen ein Kanal (35) zur Aufnahme eines Bandes aus einem mit einem Explosivstoff versehenen abgeflachten Rohr bildet, wobei das Zwischenstück eine Abschernut (33) aufweist.

6. Vorrichtung nach Anspruch 5, dadurch gekennzeichnet, daß das Zwischenstück (33) an einem seiner Enden eine Abschernut (33) und am anderen Ende ein Falznut (38) aufweist.

7. Vorrichtung nach einem der Ansprüche 4 bis 6, dadurch gekennzeichnet, daß die Halteeinrichtungen (16) weiterhin eine Schutzplatte (28) aufweisen, die zwischen der Querstrebe (29) und der Struktur (27) angeordnet ist.

## Claims

1. A process for opening especially an inflatable structure container, such as a plane evacuation chute, characterized in that a relay (18) for tripping a pyrotechnic member (17) is controlled by the inflating fluid pressure, the implementation of which causes retaining means (16) of the inflatable system door to be broken.

2. The process of claim 1, characterized in that said inflatable system is enclosed inside a space sealed by a door (25), which is maintained in the closed condition through breakable retaining means (16).

3. A device for opening especially an inflatable structure container, such as a plane evacuation chute, for implementing the process of claim 1 or claim 2, including a duct (14) for supplying the inflatable system with pressurized fluid, characterized in that it includes a by-pass (19) connected to said duct, with said by-pass being connected to a relay (18) for operating a striking pin with a view to firing a pyrotechnic member (17) arranged in such a way as to break said retaining means of the door of said inflatable structure container.

4. The device of claim 3, wherein said inflatable system is housed in a structure (27) sealed by a door (25), characterized in that said retaining means include at least a spacer (29), a first portion (29a) of which is integral with said structure (27) and a second portion (29b) is integral with said door (25), with a breakable portion being provided between said first and said second portions.

5. The device of claim 4, characterized in that said breakable portion includes a thinned bridge (34) connecting said first and said second portions (29a, 29b) and providing a channel (35) between said portions for receiving a cord of a type including a flattened explosive charge tube, with said bridge including a shearing slot (33).

6. The device of claim 5, characterized in that said bridge (33) includes a shearing slot (33) at one end thereof and a folding slot (38) at the other end.

7. The device of any claim 4—6, characterized in that said retaining means (16) further include a protecting plate (28) between said spacer (29) and said structure (27).

*Fig. 1*

11

14

13

19

F

15

12

18

16 17 16

*Fig. 2*

33

29a 31 35 38 16 34 29 29b

25

27 28

17

32

11

26

*Fig. 3*

29a 38 34 17

29b

28